# EUROPEAN PATENT APPLICATION

(11) **EP 1 734 263 A1**
(43) Date of publication of application: **20.12.2006**
(21) Application number: 06380161.7
(22) Date of filing: 12.06.2006
(51) Int. Cl.: F16B 5/06, B65D 5/66

(54) **Recoverable cramp for fastening the flaps of packing cardboard boxes**

(30) Priority: 14.06.2005 ES 200501429
(71) Applicant: Clemente Quilez, Pedro Manuel, 50013 Zaragoza (ES)
(72) Inventor: Clemente Quilez, Pedro Manuel, 50013 Zaragoza (ES)
(74) Representative: Ungria Lopez, Javier

(57) **Abstract**

Recoverable clip for securing the flaps of cardboard boxes for packing, being of use for the securing of closure flaps in the operation of filling and emptying of the boxes with products to be packed or removed, the clip (1) being formed from a profile (2) in an L-shape extended via two of its contiguous sides of different wings, in a 180° bend (3), in such a way that the 180° bend (3) presents a central opening defining two lateral tongues.

## Description

### OBJECT OF THE INVENTION

As stated in the title of this specification, the following invention refers to a recoverable clip for securing the flaps of cardboard boxes for packing, being of use for the securing of closure flaps in the operation of filling and emptying of the boxes with products to be packed or removed, in such a way that the recoverable clip has the aim of keeping the flaps in an open static position, backing on to the outer face of the side walls, during the process of filling and emptying of the corresponding products.

In this way, the closure flaps remain gathered, permitting the handling of the products to be located inside the box or to remove them without creating the slightest disturbance and thereby facilitating the filling and emptying operation.

### FIELD OF APPLICATION

This specification describes a recoverable clip for securing the flaps of cardboard boxes for packing, being of application in all industries involving the handling of products which have to be packed in cardboard boxes, as well as the later emptying of them.

### PRIOR ART OF THE INVENTION

As is known, in a large number of companies, products need to be packed in cardboard boxes, and these cardboard boxes are kept folded during storage and transportation in order to take up a minimum amount of space, and which are then assembled at the moment of their use.

So, the boxes are shaped first of all by assembling the base by means of the corresponding flaps and their securing by means of adhesive tape or metal securing staples, and they can then proceed to be filled and then be closed, also by means of adhesive tape or metal securing staples.

In this way, the operation of filling the boxes presents the drawback that the closure flaps tend to close, representing a continual nuisance since it hinders the operation.

Likewise, in the operation of emptying, the same drawbacks are encountered, and so the clip is equally of great use in emptying the boxes.

So, in order to solve this drawback on a makeshift basis, the closure flaps are secured by opening them towards the outer face of the sides of the box and securing them with adhesive tape.

Once the corresponding box has been filled, the adhesive tape securing the flaps has to be removed and discarded, and the box is then closed, also with adhesive tape or metal staples.

This way of acting entails an added cost due to the adhesive tape used for securing the flaps in the operation of filling the boxes, which then has to be discarded and, moreover, it requires there to be a waste paper bin at each work post.

### DESCRIPTION OF THE INVENTION

The present specification describes a recoverable clip for securing the flaps of cardboard boxes for packing, being of use for securing the closure flaps in the operation of filling and emptying of the boxes with products to be packed or removed, in such a way that the clip is shaped with a profile having an L-shape extended via two of its contiguous sides of different wings, in a 180° bend.

In a practical embodiment of the invention, the 180° bend can present a central opening defined by two lateral tongues.

Likewise, the 180° bend can be terminated in a small projection towards the outside by means of which the positioning of the recoverable clip when securing the corresponding pair of flaps is facilitated.

In this way, in order to secure the four closure flaps of a box, a pair of recoverable clips will be fitted, being attached to two upper opposing vertices of the box, securing the adjacent flaps via the outside of the box.

So, a recoverable clip is provided which, in a way that is simple, rapid and practical, permits the securing of the closure flaps of a cardboard box during the filling and emptying operation without creating the slightest disturbance in those filling and emptying operations.

On the other hand, the L-shaped profile making up the clip presents at an upper angular vertex a small projection in relation to both wings, with the aim of facilitating the stacking of the open boxes on those occasions in which the products or objects might undergo a new and later handling.

Likewise, the L-shape profile can be fitted with insertions in order to provide it with greater rigidity.

In order to complement the description that is going to be made, and with the aim of facilitating a better understanding of the characteristics of this invention, this specification is accompanied by a set of drawings in whose figures the most characteristic details of the invention are represented by way of illustration only and not limiting.

### BRIEF DESCRIPTION OF THE DESIGNS

Figure 1.- Shows a perspective view of a recoverable clip for securing the flaps of cardboard boxes for packing, in which it can be seen how the clip is formed by an L-shape profile with an extension in two of its contiguous sides of different wings, with a 180° bend.
Figure 2.- Shows a perspective view of a variant of the practical embodiment of the recoverable clip for securing the flaps of cardboard boxes for packing, in which the extension bent through 180° presents a central opening.
Figure 3.- Shows a perspective view of a cardboard box for packing in which the closure flaps are secured by a pair of recoverable clips.

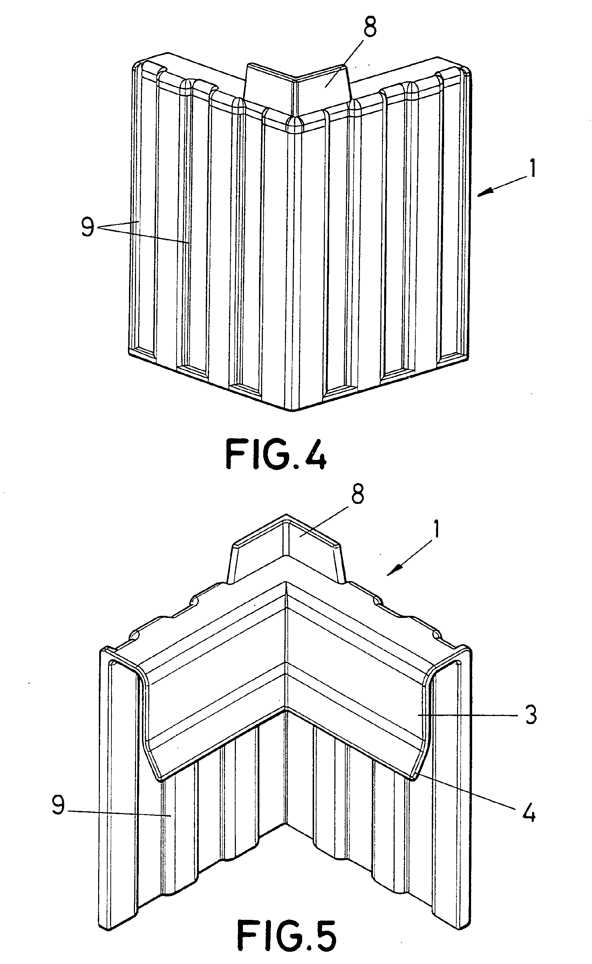

Figure 4.- Shows a first perspective view of a clip according to a variant of the practical embodiment in which the clip presents a small extension in its upper angular vertex with respect to both wings.
Figure 5.- Shows a second perspective view of the clip of the previous figure.

### DESCRIPTION OF A PREFERRED EMBODIMENT

With the said figures in view and in accordance with the adopted numbering, we can see how the recoverable clip 1 for securing the flaps of cardboard boxes for packing is formed by an L-shape profile 2, two of whose contiguous sides of different wings present an extension 3 according to a 180° bend.

The extension 3 can end in a projection 4 towards the outside with the aim of facilitating the fitting of the recoverable clip 1.

The recoverable clip 1 that is presented has application in securing the closure flaps of cardboard boxes for packing during the operation of filling and emptying of the boxes, in such a way that the in the securing of the flaps they back on to the outer face of the corresponding wall.

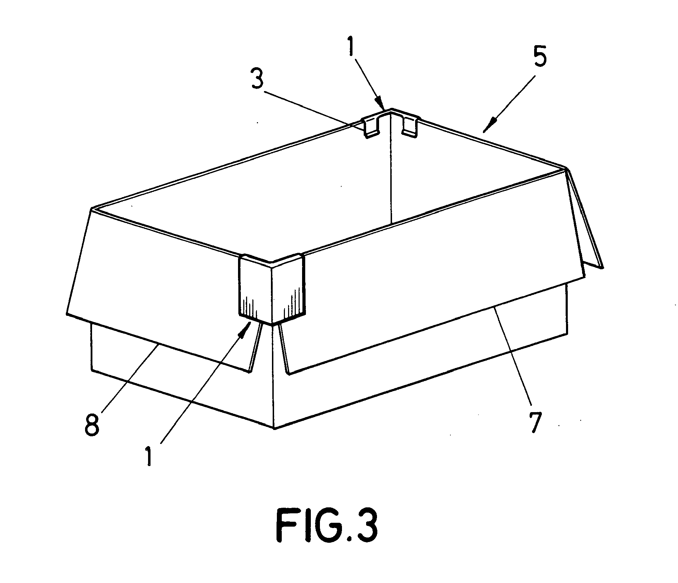

In this way, in figure 3 of the designs we can see how the clips 1 fit in two opposite vertices of the box 5 to fill, in such a way that the adjacent flaps 6 and 7 remain backing onto the outer face of contiguous walls with the opening for filling remaining totally free.

So, in a way that is simple, rapid and completely reliable, the flaps of the box 5 are secured, thus facilitating the filling and emptying operation without creating the slightest disturbance for the operator.

Once the operation of filling the box 5 is complete, the recoverable clips 1 are removed and the box is proceeded to be closed, while in the emptying operation, once the box is open, the clips are secured and the products will then be extracted.

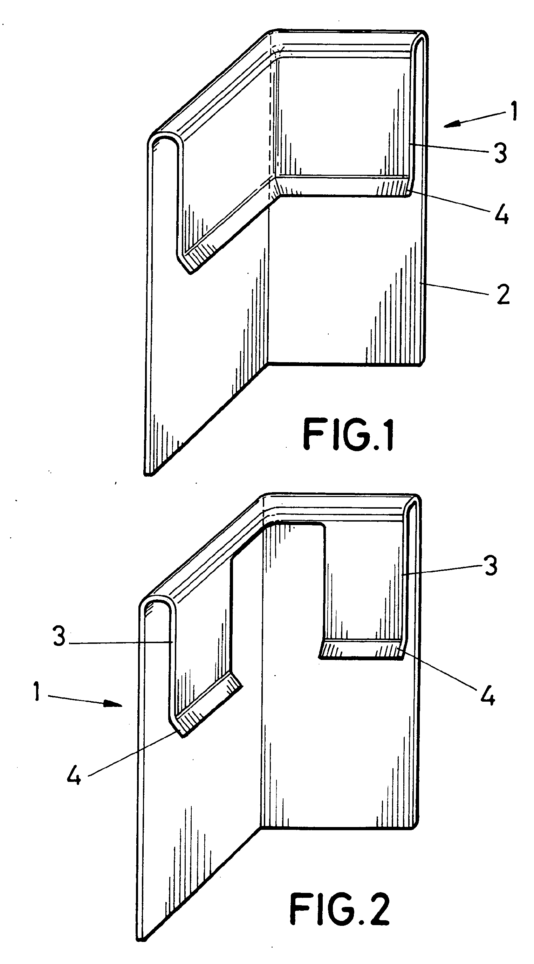

Moreover, as can be seen in figures 1 and 2, the extension 3 bent through 180° will be able to encompass the entire width of the wings of the profile 2, or it will be able to present a central opening which defines two lateral tongues.

The distance between the wings of the profile 2 and the extension 3 bent through 180° will be similar to the width of the flap and of the wall onto which it backs for being secured.

Likewise, the use of the recoverable clips 1 avoids having to secure the flaps of the cardboard boxes for packing in the operation of filling and emptying by means of using adhesive tape on a makeshift basis, the tape having to be discarded once the box is full or empty, with the added cost that this represents.

Moreover, in a variant of the practical embodiment of the invention, the clip 1 can, in relation to the upper angular vertex of the L-shape profile 2, be provided with a small extension 8, in relation to both wings, with the aim of facilitating the stacking of open boxes. This embodiment will have special application when the products or objects contained in the box have to undergo a new and later handling.

Likewise, the L-shape profile 2 forming the clip 1 can present a series of insertions 9 with the aim of granting it greater rigidity.

## Claims

1. RECOVERABLE CLIP FOR SECURING THE FLAPS OF CARDBOARD BOXES FOR PACKING, being of use for the securing of closure flaps in the operation of filling and emptying of the boxes with products to be packed or removed, **characterised in that** the clip (1) is formed by a profile (2) with an extended L-shape via two of its contiguous sides of different wings, in a 180° bend (3).

2. RECOVERABLE CLIP FOR SECURING THE FLAPS OF CARDBOARD BOXES FOR PACKING, according to claim 1, **characterised in that** the 180° bend (3) presents a central opening defining two lateral tongues.

3. RECOVERABLE CLIP FOR SECURING THE FLAPS OF CARDBOARD BOXES FOR PACKING, according to claim 1, **characterised in that** the 180° bend (3) is terminated in a small projection (4) towards the outside.

4. RECOVERABLE CLIP FOR SECURING THE FLAPS OF CARDBOARD BOXES FOR PACKING, according to claim 1, **characterised in that** the clip (1) is fitted in two upper opposing vertices of the corresponding box (5) securing the adjacent flaps via the outside of the box.

5. RECOVERABLE CLIP FOR SECURING THE FLAPS OF CARDBOARD BOXES FOR PACKING, according to claim 1, **characterised in that** the L-shape profile (2) forming the clip (1) at the upper angular vertex presents a small projection (8) in relation to both wings.
